# EUROPÄISCHE PATENTANMELDUNG

(11) **EP 4 450 327 A1**
(43) Veröffentlichungstag der Anmeldung: **23.10.2024**
(21) Anmeldenummer: 23168335.0
(22) Anmeldetag: 17.04.2023
(51) Int. Cl.: B60N 2/60, B60N 2/58, D03D 1/00, D03D 11/02

(54) **FAHRZEUGSITZBEZUG UND DAMIT BEZOGENER FAHRZEUGSITZ SOWIE VERFAHREN ZUR HERSTELLUNG DES FAHRZEUGSITZBEZUGS**

(71) Anmelder: Getzner Textil Aktiengesellschaft, 6700 Bludenz (AT)
(72) Erfinder: KIKELJ, Walter, 6822 Satteins (AT); FUSS, Constantin, 6700 Bludenz (AT)
(74) Vertreter: Keller Schneider Patent- und Markenanwälte AG

(57) **Zusammenfassung**

Die Erfindung betrifft einen Fahrzeugsitzbezug zum Beziehen einer Fahrzeugsitzstrul<tur, wobei der Fahrzeugsitzbezug ein nahtloses Gewebe aufweist, welches in einem ersten Bereich mehrschichtig ist und in einem zweiten Bereich zumindest teilweise einschichtig ist.

## Beschreibung

### Technisches Gebiet

Die Erfindung betrifft einen Fahrzeugsitzbezug und einen damit bezogenen Fahrzeugsitz, beispielsweise für einen Autositz, Busfahrgastsitz, Bahnfahrgastsitz oder Offroad-Nutzfahrzeugsitz, sowie ein Verfahren zur Herstellung des Fahrzeugsitzbezugs.

### Stand der Technik

Gattungsgemässe, aus dem Stand der Technik bekannte Fahrzeugsitzbezüge haben den Nachteil, dass ihre Herstellung sehr komplex ist und ihre Montage am Fahrzeugsitz aufwändig. Üblicherweise weisen Fahrzeugsitze zumindest einen Sitzrahmen, zumindest zwei Polsterauflagen und für jede Polsterauflage einen Bezug auf. So werden Rückenlehne und Sitzfläche oft durch je eine Polsterauflage gepolstert. I<omplexere Ausführungen mit mehreren zueinander bewegbaren Sitzteilen können auch aus mehr Polsterauflagen zusammengesetzt sein.

Ein Bezug besteht zumeist aus mehreren Stoff-, Leder- oder Lederimitations-Schnittteilen, welche händisch einem Schnittmuster folgend ausgeschnitten und zusammen vernäht werden müssen, um passgenau die 3D-I<ontur der Polsterauflage und des Sitzrahmens widerzuspiegeln. Im Anschluss muss dieser 3D-I<onturierte und vergleichsweise starre Bezug unter grosser manueller Anstrengung auf den mit den Polsterauflagen versehenen Sitzrahmen übergestülpt werden. Dabei sind nicht selten auch einige Befestigungsschritte, z.B. Tackern, durchzuführen. Eine maschinelle, geschweige denn automatisierte Erledigung dieser Produktionsschritte ist bislang nicht darstellbar.

### Aufgabe der Erfindung

Es ist daher eine Aufgabe der vorliegenden Erfindung, einen eingangs angegebenen Fahrzeugsitzbezug bereitzustellen, welcher einfacher herstellbar ist.

Insbesondere ist es ein Ziel der Erfindung, einen Fahrzeugsitzbezug mit stark reduziertem manuellen Aufwand herzustellen, wobei gleichzeitig keine Abstriche bei der Qualität, der Ästhetik und dem Sitzkomfort gemacht werden.

Die Aufgaben werden gelöst durch die Merkmale des unabhängigen Patentanspruchs. Weitere vorteilhafte Ausführungen sind in den Unteransprüchen beschrieben.

### Darstellung der Erfindung

Die Erfindung betrifft einen Fahrzeugsitzbezug zum Beziehen einer Fahrzeugsitzstrul<tur, wobei der Fahrzeugsitzbezug ein nahtloses Gewebe aufweist, welches in einem ersten Bereich mehrschichtig ist und in einem zweiten Bereich zumindest teilweise einschichtig ist.

Insbesondere handelt es sich bei dem Fahrzeugsitzbezug um einen Autositzbezug, Busfahrgastsitzbezug, Bahnfahrgastsitzbezug oder Offroad-Nutzfahrzeugsitzbezug.

Insbesondere ist das Gewebe einstückig, d.h. in einem Durchgang gewebt. Insbesondere können anschliessende Nähvorgänge vermieden werden.

Insbesondere bezieht sich der Begriff des Gewebes mit Blick auf die stellenweise Mehr- und Einschichtigl<eit auf einen nicht umgeklappten, d.h. ausgelegten, entfalteten bzw. ausgebreiteten Zustand des Gewebes. Das Gewebe kann nahtlos ausgeführt sein, d.h. der Vorteil des erfindungsgemässen Fahrzeugsitzbezugs liegt insbesondere in dem ermöglichten Ein-Schritt-Herstellungsprozess, der am laufenden Meter massentauglich ist und anschliessende Nähschritte unnötig macht. Selbstverständlich ist es jedoch immer noch möglich, gewisse Nähte doch vorzusehen.

In manchen Ausführungsformen ist das Gewebe in Richtung der I<ett- und/oder der Schussfäden elastisch.

Insbesondere kann das Gewebe aus einem elastischen Garn hergestellt sein. Da der elastische Fahrzeugbezug dazu vorgesehen ist, eine Fahrzeugsitzstrul<tur zu beziehen und hiernach im gespannten, d.h. elastisch verformten Zustand vorliegt, ist die Form und Fläche des Fahrzeugsitzbezugs an diese Verformung bereits angepasst. Mit anderen Worten ist also der Fahrzeugsitzbezug insbesondere in Form und Fläche so ausgebildet, dass die beim Beziehen der Fahrzeugsitzstrul<tur auftretende elastische Verformung berücksichtigt wird. Beispielsweise ist beim Beziehen einer Autositzstrul<tur (Rahmen plus Polster) deren Ausdehnung senkrecht zur Gewebeoberfläche, d.h. die 3D-I<ontur insbesondere der Kopfstütze, der Seitenwangen, der I<niel<ehlenauflage, etc. zu berücksichtigen. Diese Anpassung zeigt sich dann in einer entsprechenden flächigen Dimensionierung der Stellen auf dem Gewebe.

Insbesondere kann der erste, mehrschichtige Bereich je nach Ausführungsform einen Grossteil (z.B. Sitzfläche oder Rücklehne) des Fahrzeugsitzbezugs ausmachen, wobei z.B. schmale Randbereiche, die den ersten Bereich umgeben, den zweiten, einschichtigen Bereich ausmachen. In anderen Ausführungsformen hingegen kann auch der zweite, zumindest teilweise einschichtige Bereich einen Grossteil (z.B. Sitzfläche oder Rücklehne) des Fahrzeugsitzbezugs ausmachen, wobei z.B. zwei oder mehrere Randbereiche, die den zweiten Bereich umgeben und schlaufenförmige Tunnel ausbilden, den ersten, mehrschichtigen Bereich ausmachen. Dies ist bei der folgenden Beschreibung zu berücksichtigen.

In manchen Ausführungsformen weist der erste Bereich ein erstes Hohlgewebe auf, welches den Fahrzeugsitzbezug als Husse ausbildet, die auf die Fahrzeugsitzstrul<tur aufziehbar ist, und wobei der zweite Bereich als ein den ersten Bereich zumindest teilweise umgebender Umlaufstreifen vorliegt.

Insbesondere kann somit der erste Bereich grob gesagt als derjenige Bereich angesehen werden, in dem auch die Sitzfläche angeordnet ist.

Insbesondere liegt somit beispielsweise eine zwei schichtige Sitzfläche vor für den Fall, dass der Fahrzeugsitzbezug ein Stangengerüst als Fahrzeugsitzstrul<tur bezieht. Im Falle beispielsweise eines Autositzes, bei dem der Fahrzeugsitzbezug den Sitzrahmen und die Polsterung bezieht, ist das Gewebe hier zwar mehrschichtig, die Sitzfläche jedoch teilweise einschichtig.

In manchen Ausführungsformen weist das erste Hohlgewebe zwei Schichten auf, wobei eine der beiden Schichten zumindest eine I<avität aufweist, die als ein zweites Hohlgewebe vorliegt.

Insbesondere liegt somit bei der I<avität mindestens eine Dreischichtigl<eit des Gewebes vor.

In manchen Ausführungsformen ist die I<avität im ersten Bereich zum Unterbringen eines Polsterelements ausgebildet. Somit kann der Sitzkomfort weiter gesteigert werden.

In manchen Ausführungsformen weist der zweite Bereich zumindest eine I<avität auf, die als ein drittes Hohlgewebe ausgebildet ist.

Insbesondere kann somit der zweite Bereich grob gesagt als derjenige Bereich angesehen werden, in dem auch die Sitzfläche angeordnet ist. Eine solche Sitzfläche kann prinzipiell einschichtig ausgeführt sein, wobei aber zumindest eine I<avität vorgesehen ist.

In manchen Ausführungsformen ist die I<avität im zweiten Bereich zum Unterbringen eines Polsterelements ausgebildet. Somit kann der Sitzkomfort weiter gesteigert werden.

Insbesondere ist in diesen beiden zuvor genannten Ausführungsformen also nicht nur ein den Fahrzeugsitzbezug zumindest teilweise umrandender Streifenbereich einschichtig, sondern zudem ein zentraler Grossteil (d.h. der Ort der Sitz- oder Rückenfläche).

Insbesondere wird im Folgenden wieder auf Ausführungsformen eingegangen, die grösstenteils mehrschichtig und lediglich in einem den Fahrzeugsitzbezug zumindest teilweise umrandenden Streifenbereich einschichtig sind:
In manchen Ausführungsformen weist der erste Bereich ein viertes Hohlgewebe auf, welches längliche Schlaufen ausgebildet, mittels welcher der Fahrzeugsitzbezug auf Stangen der Fahrzeugsitzstrul<tur (bzw. auf ein Stangengerüst als Fahrzeugsitzstrul<tur) aufziehbar ist.

Insbesondere kann somit eine Husse erzeugt werden, die unabhängig von ihrer zweilagigen Sitz- oder Rückenfläche mit eingewebten Schlaufen auf ein Stangengerüst aufgezogen werden kann. Dies erhöht die Stabilität und den Sitzkomfort.

Die Erfindung betrifft weiterhin Fahrzeugsitze jeweils mit einer Fahrzeugsitzstrul<tur und mindestens einem Fahrzeugsitzbezug nach der Beschreibung hierin.

In manchen Ausführungsformen umfasst die Fahrzeugsitzstrul<tur ein Stangengerüst, wobei zumindest ein Teil des Stangengerüsts mit dem Fahrzeugsitzbezug bezogen ist.

In manchen Ausführungsformen ist zumindest ein Teil des Stangengerüsts mit dem Fahrzeugsitzbezug mittels der länglichen Schlaufen bezogen. Wie oben beschrieben wurde, können diese Schlaufen (müssen aber nicht) den einzigen ersten (also mehrschichtigen) Bereich ausmachen.

In manchen Ausführungsformen umfasst die Fahrzeugsitzstrul<tur einen Sitzrahmen mit Rückenlehnenteil und Sitzflächenteil und je zumindest einer am Rückenlehnenteil und Sitzflächenteil angeordneten Polsterauflage, wobei das gepolsterte Rückenlehnenteil und/oder das gepolsterte Sitzflächenteil mit dem Fahrzeugsitzbezug bezogen ist.

In manchen Ausführungsformen, in denen zumindest das Rückenlehnenteil mit dem Fahrzeugsitzbezug bezogen ist, weist das Rückenlehnenteil eine höhenverstellbare Kopfstütze auf. Bei einer elastischen Beschaffenheit des Gewebes kann die I<opfstütze somit unter dem Fahrzeugsitzbezug verstellt werden, sodass sich dieser beim Ausfahren der Kopfstütze der Bezug dehnt und sich beim Ablassen der I<opfstütze der Bezug wieder zusammenzieht. Damit ist ein nach aussen hin einstückig und nahtlos anmutender Sitz bereitstellbar.

Insbesondere kann, wenn das Sitzflächenteil mit dem Fahrzeugsitzbezug bezogen ist, das Sitzflächenteil eine verstellbare I<niel<ehlenauflage aufweisen. Eine elastische Beschaffenheit des Gewebes kann sich an eine Verstellung, insbesondere Ausdehnung oder Verkippung, der I<niel<ehlenauflage anpassen.

In manchen Ausführungsformen weist der Fahrzeugsitz zumindest ein Klettverschlusselement auf, welches zwischen Fahrzeugsitzbezug und Polsterauflage zum Fixieren des Fahrzeugsitzbezugs angeordnet ist.

Die Erfindung betrifft auch ein Verfahren zur Herstellung eines Fahrzeugsitzbezugs nach der Beschreibung hierin, wobei das Verfahren die folgenden Schritte aufweist: (a) Herstellen einer Meterware auf einer Jacquardmaschine, wobei die Meterware das Gewebe aufweist, und (b) Ausschneiden des Gewebes aus der Meterware entlang zumindest eines Teils des zweiten Bereichs.

In manchen Ausführungsformen werden bei der Herstellung des Gewebes jeweils zwei oder mehrere I<ett- und Schussfadensysteme verwendet. Damit können die entsprechenden Hohlgewebe bzw. I<avitäten bereitgestellt werden.

### Kurze Beschreibung der Zeichnungen

Im Folgenden wird die Erfindung mit Bezug auf die Zeichnungen anhand verschiedener Ausführungsformen näher erklärt.
- Fig. 1: zeigt eine Meterware eines Gewebes mit ausschneidbaren Fahrzeugsitzbezügen.
- Fig. 2: zeigt einen aus der Meterware aus Figur 1 ausgeschnittenen Fahrzeugsitzbezug.
- Fig. 3: zeigt einen schematischen Querschnitt des Fahrzeugsitzbezugs aus Figur 2.
- Fig. 4: zeigt einen Fahrzeugsitz mit zwei Fahrzeugsitzbezügen aus Figur 2 und Stangengerüst als Fahrzeugsitzstrul<tur.
- Fig. 5: zeigt eine weitere Ausführungsform eines Fahrzeugsitzbezugs mit schlaufenförmigem ersten Bereich.
- Fig. 6: zeigt einen schematischen Querschnitt des Fahrzeugsitzbezugs aus Figur 5.
- Fig. 7: zeigt einen Fahrzeugsitz mit zwei Fahrzeugsitzbezügen aus Figur 5 und Stangengerüst als Fahrzeugsitzstrul<tur.
- Fig. 8: zeigt eine weitere Ausführungsform eines Fahrzeugsitzbezugs mit Schlaufen, durchgängigem ersten Bereich und gepolsterten I<avitäten.
- Fig. 9: zeigt einen schematischen Querschnitt des Fahrzeugsitzbezugs aus Figur 8.
- Fig. 10: zeigt eine der in Figur 8 gezeigten I<avitäten in der Nahansicht.
- Fig. 11: zeigt einen schematischen Querschnitt der I<avität aus Figur 10.
- Fig. 12: zeigt eine Meterware mit ausschneidbaren Fahrzeugsitzbezügen als weitere Ausführungsform.
- Fig. 13: zeigt einen aus der Meterware aus Figur 12 ausgeschnittenen Fahrzeugsitzbezug.
- Fig. 14: zeigt einen Teil eines Fahrzeugsitzes mit dem Fahrzeugsitzbezug aus Figur 13 und einer gepolsterten Rückenlehne als Fahrzeugsitzstrul<tur.
- Fig. 15: zeigt eine weitere Ausführungsform eines Fahrzeugsitzbezugs mit gepolsterten I<avitäten.
- Fig. 16: zeigt eine der in Figur 15 gezeigten I<avitäten in der Nahansicht.
- Fig. 17: zeigt einen schematischen Querschnitt der I<avität aus Figur 16.

### Wege zur Ausführung der Erfindung

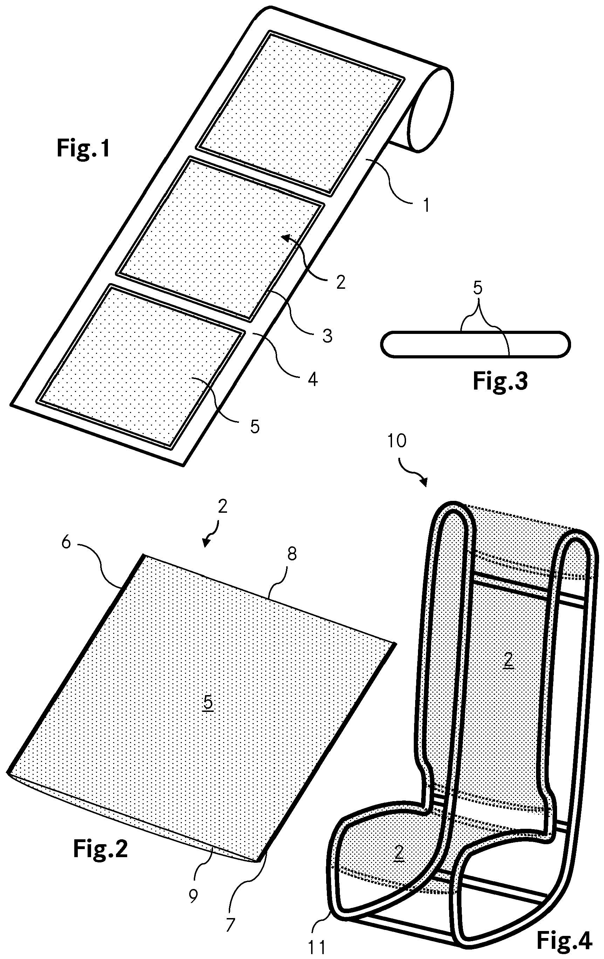

Figur 1 zeigt eine Meterware 1 eines Gewebes mit ausschneidbaren Fahrzeugsitzbezügen 2. Die hier gezeigten Fahrzeugsitzbezüge 2 sind entlang des hier dargestellten Streifens 3 auszuschneiden. In diesem Streifen 3, der in Wirklichkeit nicht unbedingt sichtbar sein muss, ist das Gewebe einschichtig. Im restlichen Bereich 4 der Meterware kann das Gewebe einoder mehrschichtig sein. Die Meterware 1 ist ein zusammenhängendes bzw. nahtloses Gewebe, das in einem einzigen Webvorgang hergestellt werden kann, dies bevorzugt auf einer Jacquardmaschine.

Jeder Fahrzeugsitzbezug 2 besteht überwiegend aus dem ersten Bereich 5, welcher zweilagig bzw. zweischichtig ist. Figur 3 zeigt den schematischen Querschnitt. Diese Zweischichtigl<eit wird insbesondere dadurch erreicht, dass zwei I<ett- und Schussfadensysteme beim Webvorgang verwendet werden und somit das Hohlgewebe 5 bereitstellbar ist.

Figur 2 zeigt einen aus der Meterware aus Figur 1 ausgeschnittenen Fahrzeugsitzbezug. Nur zwei sich gegenüberliegende Randstreifen 6 und 7 sind einschichtig. Die Randstreifen 6 und 7 stellen also den zweiten Bereich dar, der zumindest teilweise einschichtig ist. Die weiteren sich gegenüberliegenden Ränder 8 und 9 sind offen, d.h. hier liegt das Gewebe zweischichtig vor. Beim Ausschneiden entlang des Streifens 3 (siehe Figur 1) ist also darauf zu achten, dass das Hohlgewebe 5 an den Rändern 8 und 9 aufgeschnitten wird und an den Rändern 6 und 7 nicht.

Figur 4 zeigt einen Fahrzeugsitz 10 mit zwei Fahrzeugsitzbezügen 2 aus Figur 2 und Stangengerüst 11 als Fahrzeugsitzstrul<tur. Bevor die Stangen des Stangengerüsts 11 mit den Fahrzeugsitzbezügen 2 bezogen werden, können die Fahrzeugsitzbezüge 2 auf links gedreht werden, um einen eventuell leicht überstehenden einschichtigen Streifen zu verstecken. Insbesondere weist die Sitzstruktur Aufnahmen (wie z.B. Stangen 11) auf, damit der Sitzbezugsstoff passend drappierbar ist. Solche Stühle eignen sich insbesondere sehr gut als Einzelsitz für ein Zugabteil, für einen Reisebus oder als Fahrersitz für ein landwirtschaftliches Nutzfahrzeug.

Je nach bevorzugtem Grad an Elastizität kann das Gewebe des Fahrzeugsitzbezugs 2 in einer oder beiden Richtungen (I<ettfaden/Schussfaden) aus einem elastischen und unelastischem Garn gefertigt sein. Eine erhöhte Elastizität erleichtert das Beziehen der Fahrzeugsitzstrul<tur 11. Elastische Gewebe haben allerdings andere Masse bei der Herstellung, also beim Weben. Sobald das Gewebe dem Webstuhl entnommen wird, zieht es in Richtung der I<ett- und der Schussfäden zusammen und verliert seine ursprünglichen Masse. Bei elastischen Geweben müssen die Masse (Form und Fläche) der Fahrzeugsitzbezüge 2 demnach zurückgerechnet werden, damit die Endmasse mit den Vorgaben übereinstimmen.

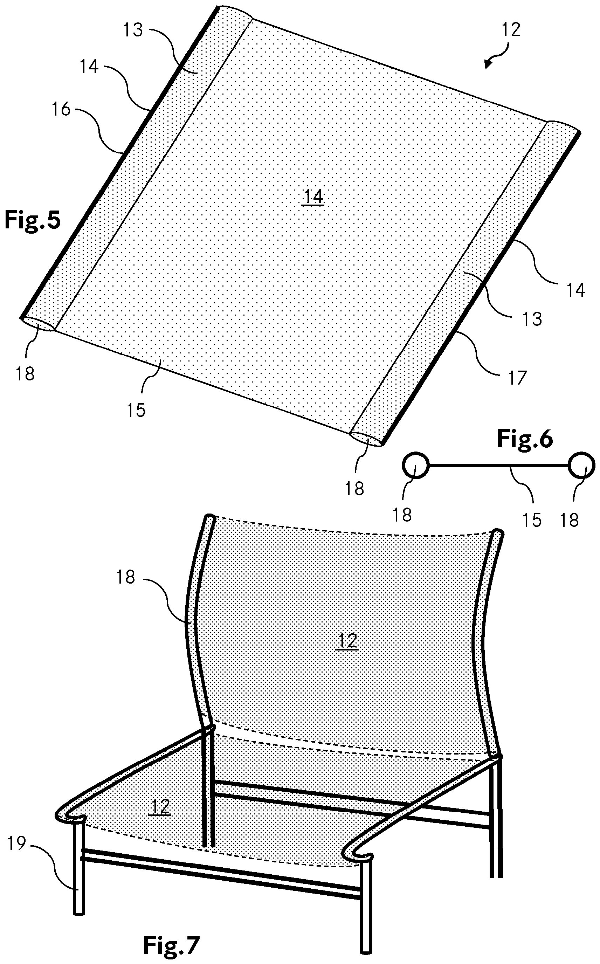

Figur 5 zeigt eine weitere Ausführungsform eines Fahrzeugsitzbezugs 12 mit schlaufenförmigem ersten Bereich 13. Im zweiten Bereich 14, der die Sitzfläche 15 sowie die beiden Ränder 16 und 17 umfasst, ist das Gewebe einschichtig. In Figur 6 ist der Querschnitt schematisch gezeigt. Mit den Schlaufen 18 kann der in Figur 7 durchsichtig gezeichnete Fahrzeugsitzbezug 12 auf das Stangengerüst 19 gezogen werden, einmal für die Sitzfläche und einmal für die Rückenlehne. Solche Stühle eignen sich insbesondere sehr gut als Zweiersitz bzw. Zweierbanl< für ein Zugabteil.

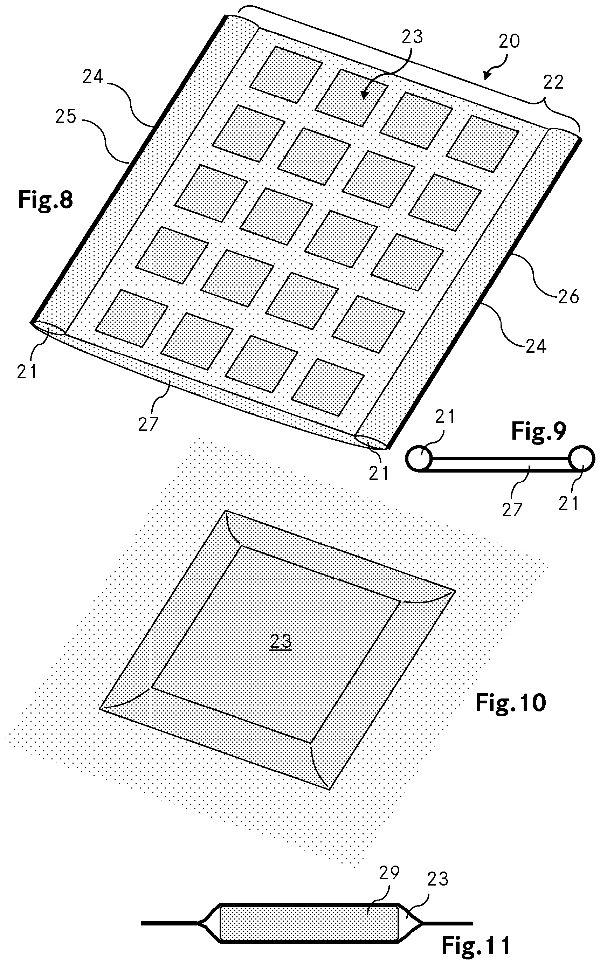

In einer Abwandlung dieser Ausführungsform aus Figur 5 können im zweiten Bereich 14, der prinzipiell einschichtig ist, auch Kavitäten vorgesehen sein, wie sie in Figur 8 vorgestellt werden. Damit wäre der zweite Bereich zumindest teilweise einschichtig und teilweise zweischichtig.

Fig. 8 zeigt eine weitere Ausführungsform eines Fahrzeugsitzbezugs 20 mit Schlaufen 21, durchgängigem ersten Bereich 22 und gepolsterten I<avitäten 23. Der zweite Bereich 24, also der Ort, wo das Gewebe einschichtig ist, befindet sich diesmal einzig an den Rändern 25 und 26. Neben den Schlaufen 21 weist der Fahrzeugsitzbezug 20 auch ein grosses Hohlgewebe 27 auf.

Ein solcher Fahrzeugsitzbezug lässt sich auf ein Gerüst wie in Figur 4 oder Figur 7 ziehen oder aber alternativ auch auf Vollschalensitze oder Teile davon (Sitzfläche, Rückenlehne). Somit ist der Fahrzeugsitzbezug 20 vielseitig bzw. flexibel einsetzbar. Andererseits bietet der Fahrzeugsitzbezug 20 gegenüber der vorherigen Ausführungsform eine stabilere Sitzfläche. Figur 9 zeigt einen schematischen Querschnitt des Fahrzeugsitzbezugs aus Figur 8.

Zudem weist der Fahrzeugsitzbezug 20 eine Vielzahl an I<avitäten 23 auf, die mit einem Polstereinsatz 29 ausgefüllt sind. Dieses Ausfüllen kann während des Webprozesses maschinell erfolgen, oder im Anschluss wobei ein Zugang zur I<avität zum Einfügen des Polstereinsatzes geschaffen werden muss. Im Bereich der I<avitäten ist das Gewebe also mindestens dreischichtig. Figur 10 zeigt eine der in Figur 8 gezeigten I<avitäten 23 in der Nahansicht und Figur 11 zeigt einen schematischen Querschnitt dieser I<avität 23, wo entsprechend das Polster 29 zu sehen ist. In dieser Ausführungsform stellen also die Ränder 25 und 26 den zweiten Bereich dar und alles übrige den ersten Bereich, der zwischen zwei und drei Schichten wechselt.

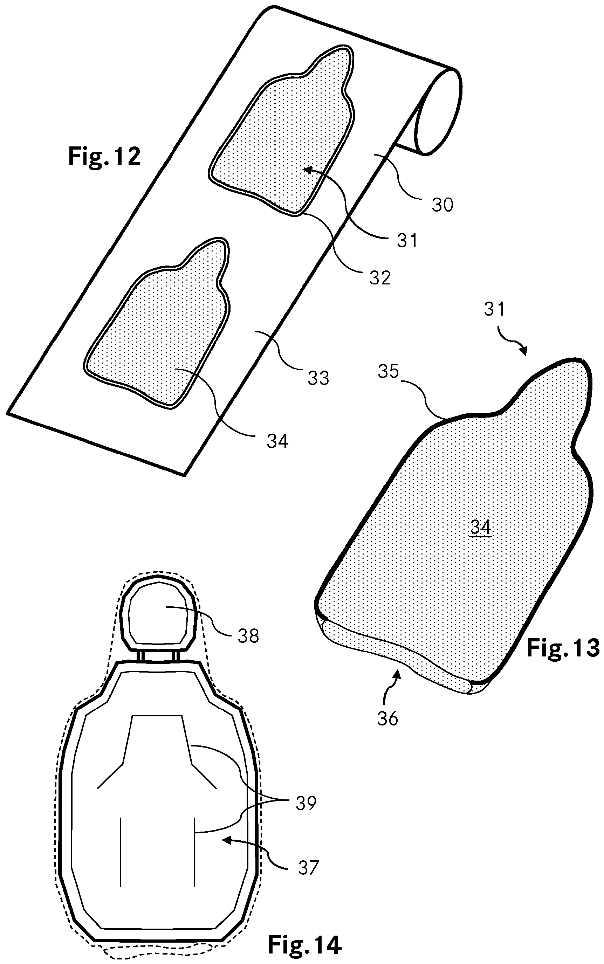

Figur 12 zeigt eine weitere Meterware 30 mit ausschneidbaren Fahrzeugsitzbezügen 31 als weitere Ausführungsform. Wieder kann ein Fahrzeugsitzbezug 31 am Randbereich 32 ausgeschnitten werden, wobei, wie in Figur 13 zu sehen ist, der zweite Bereich 35 einschichtig ist, und der übrige Teil, der erste Bereich 34 zweischichtig. Im restlichen Bereich 33 der Meterware ist das Gewebe ebenfalls bevorzugt einschichtig. Im unteren Bereich 36 des Fahrzeugsitzbezugs 31 ist das Gewebe so geschnitten, dass ein Zugang zum Hohlgewebe des ersten Bereichs 34 geschaffen wird. Diese Öffnung 36 ist hier ausgespreizt dargestellt, damit man die Zweischichtigl<eit des Gewebes erkennen kann.

Figur 14 zeigt einen Teil eines Fahrzeugsitzes mit dem durchsichtig dargestellten Fahrzeugsitzbezug 31 aus Figur 13 und einer gepolsterten Rückenlehne 37 als Fahrzeugsitzstrul<tur. Die elektronisch höhenverstellbare Kopfstütze 38, die als zur Rückenlehne 37 zugehörig gelten darf, kann sich unterhalb der Husse 31 frei bewegen, da das Gewebe elastisch ist. Somit ist ein optisch nahtloser Autositz geschaffen, selbst wenn die I<opfstütze in der Höhe verstellt wird.

Die Kontursicken 39 im Polsterschaum des Rückenlehnenteils 37 dienen der Ergonomie, z.B. zur Schaffung von Seitenbacl<en für einen besseren Seitenhalt. Das Gewebe des Fahrzeugsitzbezugs 31 ist wie erwähnt elastisch und ist daher im Stande sich der Form anzupassen. In diesem Fall von Vertiefungen können weitere Mittel vorgesehen sein, um das Gewebe an das Polster anschmiegen zu lassen. Beispielsweise können Klebstoff, Magnetelemente oder Klettverschlüsse zwischen der oberen Schicht des Hohlgewebes im ersten Bereich 34 und dem Polster vorgesehen sein.

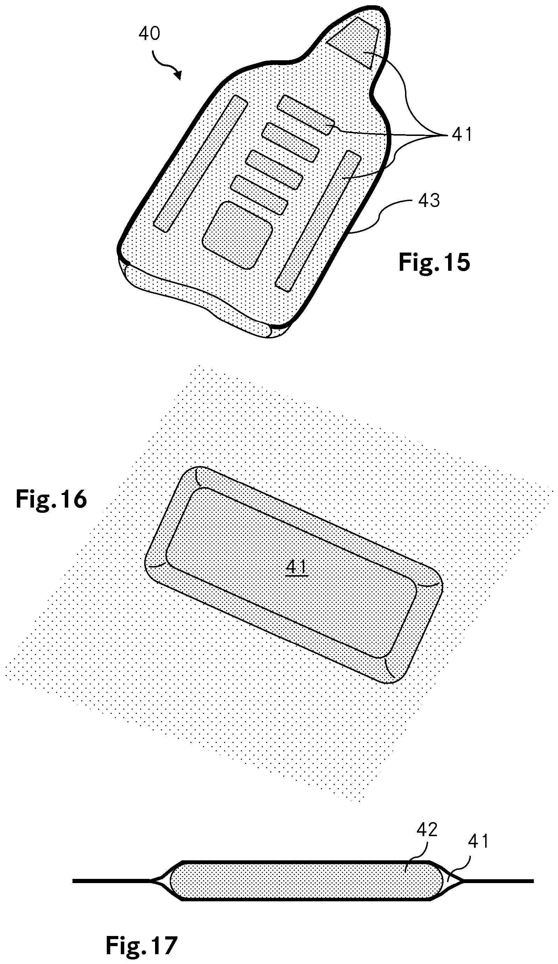

Figur 15 zeigt eine weitere Ausführungsform eines Fahrzeugsitzbezugs 40, die im Wesentlichen auf der Ausführungsform 31 beruht, jedoch gepolsterte I<avitäten 41 aufweist. In nun von den vorherigen Ausführungen bekannter Weise sind, wie die Figuren 16 (Nahansicht) und 17 (Querschnitt) zeigen, in den I<avitäten 41 Polster 42 vorgesehen zur weiteren Ergonomiesteigerung des Fahrzeugsitzes. Der erste, hier zwei- bis dreischichtige Bereich befindet sich im gesamten Inneren des ausgeschnittenen Gewebes 40 und der zweite, einschichtige Bereich ist der Randbereich 43, der die Husse zusammenhält.

Die Ausführungsformen der Figuren 12 bis 17 eignen sich bevorzugt für Fahrer- und Passagiersitze von Autos, Bussen und Offroad-Fahrzeugen aller Art.

Die Erfindung wurde zwar anhand ihrer bevorzugten Ausführungsform(en) erläutert, doch es können viele weitere Änderungen und Variationen vorgenommen werden, ohne über den Umfang der vorliegenden Erfindung hinauszugehen. Daher ist es vorgesehen, dass die beiliegenden Patentansprüche Änderungen und Variationen abdecken, die im tatsächlichen Umfang der Erfindung enthalten sind.

### Bezugszeichenliste

- 1,30: Meterware
- 2,12,20,31,40: Fahrzeugsitzbezug
- 3,32: Streifen, Randbereich
- 4,33: Restlicher Bereich
- 5,13,22,34: Erster Bereich
- 6,7,14,24,35,43: Zweiter Bereich
- 8,9: Zweischichtiger Rand
- 10: Fahrzeugsitz
- 11,19,37: Fahrzeugsitzstruktur
- 15: Sitzfläche
- 16,17,25,26: Ränder
- 18,21: Schlaufen
- 23,41: I<avität
- 27: Hohlgewebe
- 29,42: Polstereinsatz
- 36: Öffnung
- 38: Kopfstütze
- 39: I<ontursicl<en

## Patentansprüche

1. Fahrzeugsitzbezug (2,12,20,31,40) zum Beziehen einer Fahrzeugsitzstrul<tur (11,19,37), aufweisend ein nahtloses Gewebe, welches in einem ersten Bereich (5,13,22,34) mehrschichtig ist und in einem zweiten Bereich (6,7,14,24,35,43) zumindest teilweise einschichtig ist.

2. Fahrzeugsitzbezug (2,12,20,31,40) nach Anspruch 1, wobei das Gewebe in Richtung der I<ett- und/oder der Schussfäden elastisch ist.

3. Fahrzeugsitzbezug (2,12,20,31,40) nach einem der vorangehenden Ansprüche, wobei der erste Bereich (5,13,22,34) ein erstes Hohlgewebe aufweist, welches den Fahrzeugsitzbezug (2,12,20,31,40) als Husse ausbildet, die auf die Fahrzeugsitzstrul<tur (11,19,37) aufziehbar ist, und wobei der zweite Bereich (6,7,14,24,35,43) als ein den ersten Bereich (5,13,22,34) zumindest teilweise umgebender Umlaufstreifen (16,17,25,26) vorliegt.

4. Fahrzeugsitzbezug (20,40) nach Anspruch 3, wobei das erste Hohlgewebe zwei Schichten aufweist, wobei eine der beiden Schichten zumindest eine I<avität (23,41) aufweist, die als ein zweites Hohlgewebe vorliegt.

5. Fahrzeugsitzbezug (20,40) nach Anspruch 4, wobei die I<avität (23) im ersten Bereich (13) zum Unterbringen eines Polsterelements (29) ausgebildet ist.

6. Fahrzeugsitzbezug (12) nach Anspruch 1, wobei der zweite Bereich (14) zumindest eine I<avität (23) aufweist, die als ein drittes Hohlgewebe ausgebildet ist.

7. Fahrzeugsitzbezug (12) nach Anspruch 6, wobei die I<avität (23) im zweiten Bereich zum Unterbringen eines Polsterelements (29) ausgebildet ist.

8. Fahrzeugsitzbezug (20) nach einem der vorangehenden Ansprüche, wobei der erste Bereich ein viertes Hohlgewebe aufweist, welches längliche Schlaufen (21) ausgebildet, mittels welcher der Fahrzeugsitzbezug (20) auf Stangen der Fahrzeugsitzstrul<tur (11,19) aufziehbar ist.

9. Fahrzeugsitz (10) mit einer Fahrzeugsitzstrul<tur (11,19) und mindestens einem Fahrzeugsitzbezug (2,12,20) nach einem der vorangehenden Ansprüche, wobei die Fahrzeugsitzstrul<tur (11,19) ein Stangengerüst umfasst, und wobei zumindest ein Teil des Stangengerüsts mit dem Fahrzeugsitzbezug (2,12,20) bezogen ist.

10. Fahrzeugsitz (10) mit einer Fahrzeugsitzstrul<tur (11,19) und mindestens einem Fahrzeugsitzbezug (20) nach Anspruch 8, wobei die Fahrzeugsitzstrul<tur (11,19) ein Stangengerüst umfasst, und wobei zumindest ein Teil des Stangengerüsts mit dem Fahrzeugsitzbezug mittels der länglichen Schlaufen bezogen ist.

11. Fahrzeugsitz mit einer Fahrzeugsitzstrul<tur und mindestens einem Fahrzeugsitzbezug (31,40) nach einem der Ansprüche 1 bis 4, wobei die Fahrzeugsitzstrul<tur einen Sitzrahmen mit Rückenlehnenteil (37) und Sitzflächenteil und je zumindest einer am Rückenlehnenteil (37) und Sitzflächenteil angeordneten Polsterauflage umfasst, wobei das gepolsterte Rückenlehnenteil (37) und/oder das gepolsterte Sitzflächenteil mit dem Fahrzeugsitzbezug (31,40) bezogen ist.

12. Fahrzeugsitz nach Anspruch 11, wobei zumindest das Rückenlehnenteil (37) mit dem Fahrzeugsitzbezug (31,40) bezogen ist und das Rückenlehnenteil eine höhenverstellbare I<opfstütze (38) aufweist.

13. Fahrzeugsitz nach Anspruch 11 oder 12, aufweisend zumindest ein Klettverschlusselement, welches zwischen Fahrzeugsitzbezug (31,40) und Polsterauflage zum Fixieren des Fahrzeugsitzbezugs angeordnet ist.

14. Verfahren zur Herstellung eines Fahrzeugsitzbezugs (2,12,20,31,40) nach einem der Ansprüche 1 bis 8, mit den Schritten: (a) Herstellen einer Meterware (1,30) auf einer Jacquardmaschine, wobei die Meterware (1,30) das Gewebe aufweist, und (b) Ausschneiden des Gewebes aus der Meterware (1,30) entlang zumindest eines Teils (3,32) des zweiten Bereichs (6,7,14,24,35,43).

15. Verfahren nach Anspruch 14, wobei bei der Herstellung des Gewebes jeweils zwei oder mehrere I<ett- und Schussfadensysteme verwendet werden.
